# EUROPÄISCHE PATENTSCHRIFT

(11) **EP 3 069 961 B1**
(45) Veröffentlichungstag und Bekanntmachung des Hinweises auf die Patenterteilung: **27.06.2018**
(21) Anmeldenummer: 16160924.3
(22) Anmeldetag: 17.03.2016
(51) Int. Cl.: B62D 13/00, B62D 11/00, B62D 59/04

(54) **VORRICHTUNG ZUR LENKUNTERSTÜTZUNG EINES FAHRZEUGGESPANNS**
DEVICE FOR ASSISTING THE STERRING OF A VEHICLE COMBINATION
DISPOSITIF D'ASSISTANCE DE DIRECTION D'UN TRAIN DE VEHICULE AUTOMOBILE

(30) Priorität: 18.03.2015 DE 102015204892
(43) Veröffentlichungstag der Anmeldung: 21.09.2016
(73) Patentinhaber: Deere & Company, Moline, IL 61265 (US)
(72) Erfinder: Böhm, Barbara, 69115 Heidelberg (DE); Fritz, Norbert, 68549 Ilvesheim (DE); Gugel, Rainer, 68723 Plankstadt (DE); Reinards, Marco, 67269 Grünstadt (DE)
(74) Vertreter: Dehnhardt, Florian Christopher

(56) Entgegenhaltungen:
- EP-A2- 2 774 828
- DE-A1- 4 133 912
- JP-A- H10 157 652
- US-A1- 2010 318 241
- US-A1- 2015 051 795

## Beschreibung

Die Erfindung betrifft eine Vorrichtung zur Lenkunterstützung eines Fahrzeuggespanns, mit einem Zugfahrzeug sowie einem an dem Zugfahrzeug in einem heckseitigen Kupplungspunkt schwenkbar angehängten Arbeitsgerät, wobei das Arbeitsgerät auf gegenüberliegenden Seiten angeordnete Räder aufweist, die durch Ansteuerung zugehöriger Einzelradantriebe unabhängig voneinander mit einem Antriebsmoment beaufschlagbar sind.

Eine derartige Vorrichtung geht beispielsweise aus der DE 41 33 912 A1 hervor, wobei diese zur Beeinflussung des Lenkverhaltens eines von einem Fahrzeuggespann umfassten Anhängers dient. Der an einem Zugfahrzeug des Fahrzeuggespanns über eine Deichsel angebrachte Anhänger weist an einer knicksteif mit der Deichsel verbundenen Achse rechte und linke Antriebsräder auf, die mittels separater Elektromotoren antreibbar sind. Einer elektronischen Steuereinrichtung werden unter anderem Informationen bezüglich eines an lenkbaren Vorderrädern des Zugfahrzeugs eingestellten Lenkwinkels sowie einer Fortbewegungsgeschwindigkeit des Zugfahrzeugs zugeführt, wobei die elektronische Steuereinrichtung auf Grundlage der zugeführten Informationen einen mit einem idealen Anhängerbetrieb korrespondierenden Soll-Lenkwinkel ermittelt sowie durch geeignete Ansteuerung der Elektromotoren am Anhänger einstellt. Das Dokument US2015/0051795 offenbart eine Vorrichtung gemäß dem Oberbegriff des Anspruchs 1. Ungeachtet der solchermaßen erreichten Lenkungsverbesserung des Fahrzeuggespanns führt die im Heckbereich auf das Zugfahrzeug in Vertikalrichtung wirkende Anhängelast zwangsläufig zu einer Verringerung der Traktion und damit der Seitenführungskräfte im Bereich der lenkbaren Vorderräder des Zugfahrzeugs. Um diesem Umstand Rechnung zu tragen, ist es im landwirtschaftlichen Bereich üblich, eine Ballastierung mittels zusätzlicher Frontgewichte am Zugfahrzeug vorzunehmen. Die damit einhergehende Gewichtserhöhung führt nicht nur zu einer vermehrten Verdichtung eines von dem Fahrzeuggespann befahrenen Ackerbodens bzw. zu einer entsprechenden Verringerung der Nutzlast, sondern auch zu einem kopflastigen und damit in unvorhersehbarer Weise veränderten Lenkverhalten des Zugfahrzeugs, was insbesondere bei abgenommenen Anhänger wahrnehmbar ist.

Es ist daher Aufgabe der vorliegenden Erfindung, eine Vorrichtung der eingangs genannten Art hinsichtlich eines verbesserten Lenkverhaltens des Zugfahrzeugs und damit des Fahrzeuggespanns weiterzubilden.

Diese Aufgabe wird durch eine Vorrichtung zur Lenkunterstützung eines Fahrzeuggespanns mit den Merkmalen des Patentanspruchs 1 gelöst.

Die Vorrichtung zur Lenkunterstützung eines Fahrzeuggespanns umfasst ein Zugfahrzeug sowie ein an dem Zugfahrzeug in einem heckseitigen Kupplungspunkt schwenkbar angehängtes Arbeitsgerät, wobei das Arbeitsgerät auf gegenüberliegenden Seiten angeordnete Räder aufweist, die durch Ansteuerung zugehöriger Einzelradantriebe unabhängig voneinander mit einem Antriebsmoment beaufschlagbar sind. Eine elektronische Kontrolleinheit prägt dem Arbeitsgerät durch asymmetrische Ansteuerung der Einzelradantriebe ein Giermoment r derart auf, dass eine über den heckseitigen Kupplungspunkt auf das Zugfahrzeug ausgeübte Querkraft F_{quer} im Sinne der Erzielung eines vorgegebenen Lenkverhaltens des Fahrzeuggespanns aufgebaut wird.

Die erfindungsgemäße Vorrichtung macht sich dabei den Umstand zunutze, dass sich das Zugfahrzeug von Seiten des Arbeitsgeräts über den Kupplungspunkt im Heckbereich gezielt anlenken lässt, was eine mittelbare Beeinflussung des Lenkverhaltens des Zugfahrzeugs erlaubt. Durch geeignete Vorgabe des dem Arbeitsgerät aufgeprägten Giermoments r kann daher das Lenkverhalten des Zugfahrzeugs insbesondere im Sinne eines Ausgleichs verringerter Seitenführungskräfte an dessen lenkbaren Vorderrädern korrigiert werden. Die Notwendigkeit einer Ballastierung mit Frontgewichten erübrigt sich in einem solchen Falle.

Vorteilhafte Ausführungen der erfindungsgemäßen Vorrichtung gehen aus den Unteransprüchen hervor.

Das zu erzielende Lenkverhalten des Fahrzeuggespanns lässt sich beispielsweise auf Basis verschiedener Sollwerte lenkungsspezifischer Fahrdynamikgrößen vorgeben. Hierzu kann die erfindungsgemäße Vorrichtung in unterschiedlicher Weise ausgestaltet sein.

So kann die elektronische Kontrolleinheit gemäß einer ersten Ausgestaltung der erfindungsgemäßen Vorrichtung ausgehend von einem sensorisch erfassten Istwert δᵢₛₜ einer Lenkwinkelgröße, die einen an lenkbaren Rädern des Zugfahrzeugs eingeschlagenen Radlenkwinkel wiedergibt, einen Sollwert αₛₒₗₗ einer Knickwinkelgröße berechnen, die einen zwischen Zugfahrzeug und Arbeitsgerät vorliegenden Knickwinkel wiedergibt. Die elektronische Kontrolleinheit vergleicht den berechneten Sollwert αₛₒₗₗ mit einem für die Knickwinkelgröße sensorisch erfassten Istwert αᵢₛₜ, wobei die Aufprägung des Giermoments r durch asymmetrische Ansteuerung der Einzelradantriebe mit dem Ziel erfolgt, den Istwert αᵢₛₜ der Knickwinkelgröße an den berechneten Sollwert αₛₒₗₗ anzugleichen.

Bei dieser ersten Ausgestaltung handelt es sich letztlich um die Analogie einer herkömmlichen Knicklenkung. Die Berechnung des Sollwerts αₛₒₗₗ der Knickwinkelgröße erfolgt derart, dass sich während der Fahrt des Fahrzeuggespanns eine dem Istwert δᵢₛₜ der Lenkwinkelgröße und damit den Lenkvorgaben eines Fahrzeugbedieners folgende Kurvenbahn einstellt. Die hierzu durchgeführte Angleichung zwischen Istwert αᵢₛₜ und Sollwert αₛₒₗₗ der Knickwinkelgröße erfolgt mittels eines in der elektronischen Kontrolleinheit hinterlegten Regelungsalgorithmus.

Zur sensorischen Erfassung des Istwerts δᵢₛₜ der Lenkwinkelgröße ist ein Lenkwinkelsensor vorgesehen, dessen Sensorsignale der elektronischen Kontrolleinheit gemeinsam mit denjenigen eines Knickwinkelsensors, der der sensorischen Erfassung des Istwerts αᵢₛₜ der Knickwinkelgröße dient, zur entsprechenden Ansteuerung der Einzelradantriebe zugeführt werden.

Bei dem Lenkwinkelsensor bzw. dem Knickwinkelsensor kann es sich um lineare Drehgeber in Gestalt von Potentiometern oder Inkrementalgebern handeln. Aus Gründen der Robustheit wird jedoch im Falle des Knickwinkelsensors eine berührungslose Erfassung des Istwerts αᵢₛₜ der Knickwinkelgröße bevorzugt. Diese kann beispielsweise durch Verwendung bildgebender Detektoren erfolgen, wie eines Laserscanners oder Radarsensoren, die im Heckbereich des Zugfahrzeugs angeordnet sind, um die Relativstellung des daran angehängten Arbeitsgeräts zu erfassen. Alternativ kann auch eine sensorische Erfassung der Gierraten von Zugfahrzeug und Arbeitsgerät bzw. gleichwertiger Größen wie etwa von an nicht angetriebenen Rädern von Zugfahrzeug und Arbeitsgerät auftretenden Raddrehzahldifferenzen erfolgen, wobei diese die Grundlage für eine rechnerische Ableitung des Istwerts αᵢₛₜ der Knickwinkelgröße unter Anwendung entsprechender kinematischer und geometrischer Betrachtungen (Ackermann-Bedingungen) bilden.

Ferner ist es vorstellbar, dass die Angleichung des Istwerts αᵢₛₜ der Knickwinkelgröße an den berechneten Sollwert αₛₒₗₗ durch Aufprägung des Giermoments r nicht nur während der Fahrt, sondern auch im Stillstand des Fahrzeuggespanns erfolgt, sodass ein Rangieren oder Wenden vor allem unter beengten Platzverhältnissen vereinfacht wird.

Gemäß einer zweiten Ausgestaltung der erfindungsgemäßen Vorrichtung kann die elektronische Kontrolleinheit ausgehend von einem sensorisch erfassten Istwert δᵢₛₜ einer Lenkwinkelgröße, die einen an lenkbaren Rädern des Zugfahrzeugs eingeschlagenen Radlenkwinkel wiedergibt, in Abhängigkeit eines sensorisch erfassten Istwerts vᵢₛₜ einer Fahrtgeschwindigkeitsgröße, die eine Fortbewegungsgeschwindigkeit des Zugfahrzeugs wiedergibt, einen Sollwert γₛₒₗₗ einer Gierratengröße berechnen, die eine zeitliche Gierwinkeländerung um die Hochachse des Zugfahrzeugs wiedergibt. Die Aufprägung des Giermoments r erfolgt in diesem Fall durch asymmetrische Ansteuerung der Einzelradantriebe mit dem Ziel, den Istwert γᵢₛₜ der Gierratengröße an den berechneten Sollwert γₛₒₗₗ anzugleichen.

Der berechnete Sollwert γₛₒₗₗ der Gierratengröße entspricht in diesem Fall der angesichts der aktuellen Fortbewegungsgeschwindigkeit des Fahrzeuggespanns sowie der Lenkvorgaben des Fahrzeugbedieners zu erwartenden Kurvenbahn. Die mittels eines in der elektronischen Kontrolleinheit hinterlegten Regelungsalgorithmus durchgeführte Angleichung zwischen Istwert γᵢₛₜ und Sollwert γₛₒₗₗ der Gierratengröße bewirkt daher eine Stabilisierung des Fahrzeuggespanns beim Durchfahren einer Kurve oder bei der Ausführung eines Ausweichmanövers, wobei insbesondere ein unerwünschtes Über- bzw. Untersteuern unterdrückt wird.

Ein dem Zugfahrzeug zugeordneter, als Gyroskop ausgebildeter Gierratensensor dient der sensorischen Erfassung des Istwerts γᵢₛₜ der Gierratengröße, wobei der elektronischen Kontrolleinheit die von dem Gierratensensor bereitgestellten Sensorsignale neben denjenigen eines Lenkwinkelsensors zur sensorischen Erfassung des Istwerts δᵢₛₜ der Lenkwinkelgröße sowie von Raddrehzahlsensoren zur Ableitung des Istwerts vᵢₛₜ der Fahrtgeschwindigkeitsgröße zur entsprechenden Ansteuerung der Einzelradantriebe zugeführt werden.

Gemäß einer dritten Ausgestaltung der erfindungsgemäßen Vorrichtung besteht die Möglichkeit, dass die elektronische Kontrolleinheit ausgehend von einem sensorisch erfassten Istwert δᵢₛₜ einer Lenkwinkelgröße, die einen an lenkbaren Rädern des Zugfahrzeugs eingeschlagenen Radlenkwinkel wiedergibt, einen Sollverlauf D(s) einer zu durchfahrenden Kurvenbahn ermittelt. Die Aufprägung des Giermoments r erfolgt hierbei durch asymmetrische Ansteuerung der Einzelradantriebe nach Maßgabe des ermittelten Sollverlaufs D(s), beispielsweise indem von der elektronischen Kontrolleinheit anhand des ermittelten Sollverlaufs D(s) berechnete asymmetrische Drehzahloffsets zur Ansteuerung der Einzelradantriebe vorgegeben werden. Die Vorgabe der Drehzahloffsets kann beispielsweise auf Grundlage einer in der elektronischen Kontrolleinheit hinterlegten Steuerkurve erfolgen, in die der ermittelte Sollverlauf D(s) als Steuergröße eingeht.

Die Ermittlung eines von dem Fahrzeuggespann einzuhaltenden Sollverlaufs D(s) ermöglicht es zudem, einem talwärts gerichteten Driften des Arbeitsgeräts gegenüber dem Zugfahrzeug beim Entlangfahren an einem Hang entgegenzuwirken. Dies ist beispielsweise bei der Aufnahme eines auf einem Acker abgelegten Schwads mittels eines als Ladewagen ausgebildeten Arbeitsgeräts von Bedeutung, da das Fahrzeuggespann hier dem Verlauf des Schwads möglichst mittig folgen soll. Die Einhaltung des Sollverlaufs D(s) lässt sich durch Vornahme entsprechender bedienerunabhängiger Lenkeingriffe an den lenkbaren Rädern des Zugfahrzeugs unterstützen.

Darüber hinaus ist eine GPS-gestützte Anpassung des Sollverlaufs D(s) bzw. eine entsprechende Parametrisierung der in der elektronischen Kontrolleinheit hinterlegten Steuerkurve denkbar, beispielsweise um einen in Fahrtrichtung vorausliegenden Fahrbahnabschnitt hinsichtlich möglicher Gefahrenstellen, Änderungen des Fahrbahnverlaufs oder dergleichen zu berücksichtigen. Gerade bei Straßentransportfahrten im landwirtschaftlichen Bereich ist dies aufgrund der vergleichsweise hohen Transportlasten von Vorteil.

Unabhängig von der jeweiligen Ausgestaltung der erfindungsgemäßen Vorrichtung beschreibt die Lenkwinkelgröße entweder unmittelbar den an den lenkbaren Rädern des Zugfahrzeugs eingeschlagenen Radlenkwinkel oder aber eine damit korrespondierende Größe, beispielsweise die Stellung einer in dem Zugfahrzeug vorgesehenen Lenkhandhabe in Gestalt eines Lenkrads.

Die elektronische Kontrolleinheit kann zusätzlich zur Aufprägung des Giermoments r bedienerunabhängige Lenkeingriffe am Zugfahrzeug vornehmen. Diese bieten sich insbesondere im Falle größerer Richtungskorrekturen an, sofern diese auf Grundlage einer alleinigen Ansteuerung der Einzelradantriebe nicht durchführbar sein sollten. Die bedienerunabhängigen Lenkeingriffe können entweder durch Aufschaltung eines an der Lenkhandhabe wirkenden Zusatzlenkmoments, das mittels eines elektrisch steuerbaren Lenkmomentgebers erzeugt wird, oder aber mittels einer Überlagerungslenkung erfolgen. Die Verwendung eines Lenkmomentgebers ermöglicht es, dass der Fahrzeugbediener jederzeit die Kontrolle über die Lenkung des Fahrzeuggespanns behält und den Lenkeingriffen durch Übersteuerung des an der Lenkhandhabe aufgeschalteten Zusatzlenkmoments entgegensteuern kann.

Ferner besteht die Möglichkeit, dass die Aufprägung des Giermoments r während der Durchführung eines Rangier- und/oder Wendevorgangs im Sinne der Erzielung eines übersteuernden Lenkverhaltens des Fahrzeuggespanns erfolgt. Ein übersteuerndes Lenkverhalten lässt sich insbesondere durch gezielte Vergrößerung des Knickwinkels zwischen Zugfahrzeug und Arbeitsgerät hervorrufen, sodass eine von der Stellung der Lenkhandhabe abweichende, den Wendekreis verengende Kurvenbahn durchfahren wird. Je nach Ausgestaltung der erfindungsgemäßen Vorrichtung kann dies entweder unmittelbar durch Vorgabe eines erhöhten Sollwerts α'ₛₒₗₗ > αₛₒₗₗ für die Knickwinkelgröße oder aber mittelbar durch entsprechende Modifikation des für die Gierratengröße vorgegebenen Sollwerts γₛₒₗₗ bzw. des Sollverlaufs D(s) der zu durchfahrenden Kurvenbahn geschehen.

Der Rangier- und/oder Wendevorgang ist beispielsweise von außen über eine mit der elektronischen Kontrolleinheit kommunizierende Funkfernbedienung steuerbar, sodass der Fahrzeugbediener einen verbesserten Überblick über den Rangier- und/oder Wendevorgang erhält. Bei der Funkfernbedienung handelt es sich typischerweise um ein Smartphone oder ein Tablet, das über eine WLAN- oder Bluetooth-Schnittstelle mit der elektronischen Kontrolleinheit in Verbindung steht.

Des Weiteren ist es möglich, dass die elektronische Kontrolleinheit das Arbeitsgerät im Falle der Durchführung einer Rückwärtsfahrt des Fahrzeuggespanns durch Aufschaltung einer an den Einzelradantrieben beidseitig vorgenommenen Antriebsmomenterhöhung in einen Zugbetriebsmodus versetzt. Mit anderen Worten übernimmt das Arbeitsgerät dann die Führungsfunktion innerhalb des Fahrzeuggespanns, wobei durch Aufrechterhaltung einer am heckseitigen Kupplungspunkt wirkenden vorbestimmten Zugkraft ein unerwünschtes Einknicken des Fahrzeuggespanns verlässlich unterbunden werden kann. Die Lenkung des Zugfahrzeugs kann in diesem Fall kraftfrei geschaltet werden, sodass die lenkbaren Räder von selbst der durch das Arbeitsgerät vorgegebenen Zugrichtung folgen. Abweichend davon sind jedoch auch der Zugrichtung entsprechende bedienerunabhängige Lenkeingriffe an den lenkbaren Rädern des Zugfahrzeugs denkbar.

Die erfindungsgemäße Vorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein Fahrzeuggespann mit einem Zugfahrzeug sowie einem daran angehängten Arbeitsgerät, und
- Fig. 2: ein schematisch dargestelltes Ausführungsbeispiel der erfindungsgemäßen Vorrichtung zur Lenkunterstützung des in Fig. 1 dargestellten Fahrzeuggespanns.

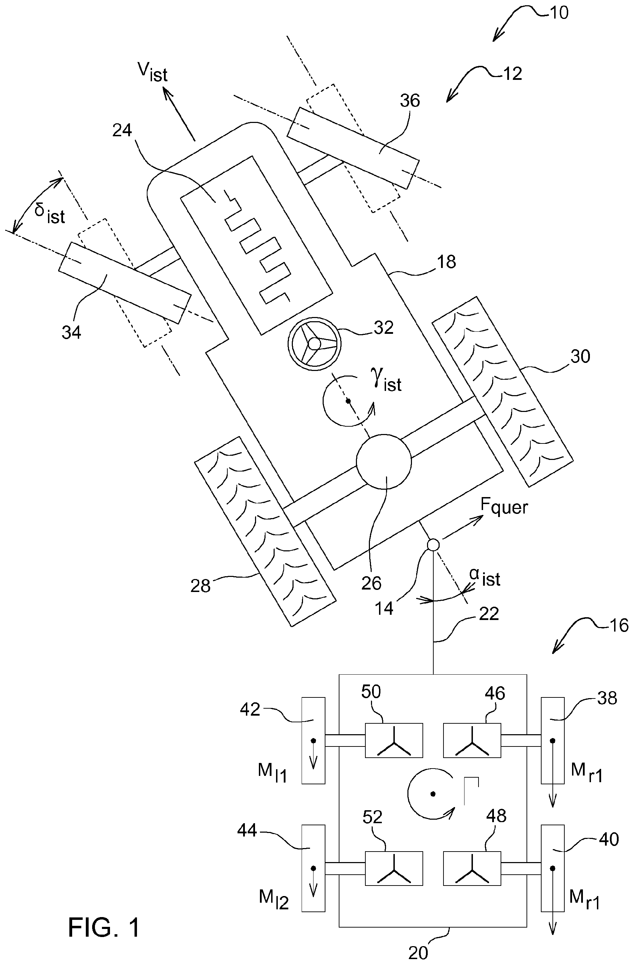

Fig. 1 zeigt ein Fahrzeuggespann 10, das ein Zugfahrzeug 12 sowie ein an dem Zugfahrzeug 12 in einem heckseitigen Kupplungspunkt 14 schwenkbar angehängtes Arbeitsgerät 16 umfasst. Im vorliegenden Fall ist das Zugfahrzeug 12 in Gestalt eines landwirtschaftlichen Traktors 18 wiedergegeben, an dem das als Transportanhänger 20 ausgebildete Arbeitsgerät 16 mittels einer starren Deichsel 22 angebracht ist.

Der landwirtschaftliche Traktor 18 ist von herkömmlicher Bauart und umfasst neben einem Verbrennungsmotor 24 sowie einem nachgeschalteten Differentialgetriebe 26 zum Antreiben zugehöriger Hinterräder 28, 30 eine in einer nicht dargestellten Fahrerkabine vorgesehene Lenkhandhabe 32 in Gestalt eines Lenkrads, das der bedienerseitigen Beeinflussung eines an lenkbaren Vorderrädern 34, 36 einstellbaren Radlenkwinkels dient.

Bei dem Transportanhänger 20 handelt es sich im vorliegenden Fall um einen zweiachsigen Ladewagen. Dieser weist an gegenüberliegenden Seiten angeordnete rechte und linke Räder 38, 40, 42, 44 auf, die durch Ansteuerung zugehöriger Einzelradantriebe 46, 48, 50, 52 unabhängig voneinander mit einem Antriebsmoment Mᵣ₁, Mᵣ₂, M₁₁, M₁₂ beaufschlagbar sind. Die Ansteuerung erfolgt seitens des landwirtschaftlichen Traktors 18. An dieser Stelle sei angemerkt, dass die Darstellung eines als zweiachsiger Ladewagen ausgebildeten Transportanhängers 20 lediglich beispielhaften Charakter hat, vielmehr kann es sich auch um ein beliebiges anderes ein- oder mehrachsiges Arbeitsgerät 16 handeln, wobei dieses neben angetriebenen Rädern auch nicht angetriebene Räder aufweisen kann.

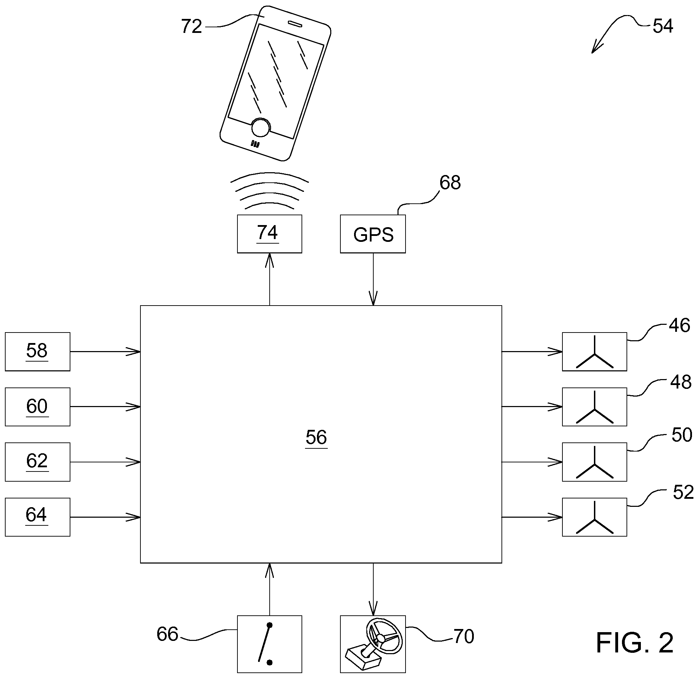

Fig. 2 zeigt ein schematisch dargestelltes Ausführungsbeispiel der erfindungsgemäßen Vorrichtung zur Lenkunterstützung eines Fahrzeuggespanns, deren Funktionsweise im Folgenden unter Bezugnahme auf Fig. 1 erläutert werden soll.

Die Vorrichtung 54 weist neben einer dem landwirtschaftlichen Traktor 18 zugeordneten elektronischen (mikroprozessorgesteuerten) Kontrolleinheit 56 eine Vielzahl von Sensoren 58, 60, 62, 64 auf, deren Sensorsignale der elektronischen Kontrolleinheit 56 zur Auswertung und entsprechenden Ansteuerung der Einzelradantriebe 46, 48, 50, 52 zugeführt werden. Genauer gesagt handelt es sich um einen Lenkwinkelsensor 58 zur sensorischen Erfassung eines Istwerts δᵢₛₜ einer Lenkwinkelgröße, die einen an den lenkbaren Vorderrädern 34, 36 des landwirtschaftlichen Traktors 18 eingeschlagenen Radlenkwinkel wiedergibt, einen Knickwinkelsensor 60 zur sensorischen Erfassung eines Istwerts αᵢₛₜ einer Knickwinkelgröße, die einen zwischen landwirtschaftlichem Traktor 18 und Transportanhänger 20 vorliegenden Knickwinkel wiedergibt, Raddrehzahlsensoren 62 zur Ableitung eines Istwerts vᵢₛₜ eines Fahrtgeschwindigkeitsgröße, die eine Fortbewegungsgeschwindigkeit des landwirtschaftlichen Traktors 18 wiedergibt, sowie einen als Gyroskop ausgebildeten Gierratensensor 64 zur sensorischen Erfassung eines Istwerts γᵢₛₜ einer Gierratengröße, die eine zeitliche Gierwinkeländerung um die Hochachse des landwirtschaftlichen Traktors 18 wiedergibt. Die Lenkwinkelgröße beschreibt entweder unmittelbar den an den lenkbaren Vorderrädern 34, 36 eingeschlagenen Radlenkwinkel oder aber eine damit korrespondierende Größe, beispielsweise die Stellung der in dem landwirtschaftlichen Traktor 18 vorgesehenen Lenkhandhabe 32.

Die vorgenannten Sensoren 58, 60, 62, 64 sind im Falle eines mit einer Lenkautomatik ausgestatteten landwirtschaftlichen Traktors 18 meist ohnehin vorhanden, sodass sich diese zum Zwecke der Lenkunterstützung des Fahrzeuggespanns 10 kostensparend mitnutzen lassen.

Über ein Bedienelement 66 lässt sich die elektronische Kontrolleinheit 56 in einen Assistenzmodus zur Lenkunterstützung versetzen. In diesem Fall prägt die elektronische Kontrolleinheit 56 dem Transportanhänger 20 durch asymmetrische Ansteuerung der Einzelradantriebe 46, 48, 50, 52 unter Erzeugung entsprechender Antriebsmomente Mᵣ₁, Mᵣ₂ > M₁₁, M₁₂ ein Giermoment r derart auf, dass eine über den heckseitigen Kupplungspunkt 14 auf den landwirtschaftlichen Traktor 18 ausgeübte Querkraft F_{quer} im Sinne der Erzielung eines vorgegebenen Lenkverhaltens des Fahrzeuggespanns 10 aufgebaut wird.

Alternativ kann zur Aufprägung des Giermoments r an den rechten Rädern 38, 40 des Transportanhängers 20 ein positives (beschleunigendes) Antriebsmoment Mᵣ₁, Mᵣ₂ > 0 und an den linken Rädern 42, 44 des Transportanhängers 20 ein negatives (verzögerndes) Antriebsmoment M₁₁, Mᵣ₂ < 0 erzeugt werden. Ebenfalls ist es möglich, lediglich an einem der beiden rechten Räder 38 oder 40 ein positives Antriebsmoment Mᵣ₁ > 0 oder Mᵣ₂ > 0 zu erzeugen und die übrigen Räder in einen frei laufenden Zustand zu versetzen.

Die Vorrichtung 54 macht sich den Umstand zunutze, dass sich der landwirtschaftliche Traktor 18 von Seiten des Transportanhängers 20 über den Kupplungspunkt 14 im Heckbereich gezielt anlenken lässt, was eine mittelbare Beeinflussung des Lenkverhaltens des landwirtschaftlichen Traktors 18 erlaubt.

Das zu erzielende Lenkverhalten des Fahrzeuggespanns 10 lässt sich auf Basis verschiedener Sollwerte lenkungsspezifischer Fahrdynamikgrößen vorgeben. Hierzu ist die Vorrichtung 54 in unterschiedlicher Weise ausgestaltet.

Gemäß einer ersten Ausgestaltung der Vorrichtung 54 berechnet die elektronische Kontrolleinheit 56 ausgehend von dem sensorisch erfassten Istwert δᵢₛₜ der Lenkwinkelgröße einen Sollwert αₛₒₗₗ für die Knickwinkelgröße und vergleicht diesen mit dem sensorisch ermittelten Istwert αᵢₛₜ, wobei die Aufprägung des Giermoments r durch asymmetrische Ansteuerung der Einzelradantriebe 46, 48, 50, 52 mit dem Ziel erfolgt, den Istwert αᵢₛₜ der Knickwinkelgröße an den berechneten Sollwert αₛₒₗₗ anzugleichen.

Bei dieser ersten Ausgestaltung handelt es sich letztlich um die Analogie einer herkömmlichen Knicklenkung. Die Berechnung des Sollwerts αₛₒₗₗ der Knickwinkelgröße erfolgt derart, dass sich während der Fahrt des Fahrzeuggespanns 10 eine dem Istwert δᵢₛₜ der Lenkwinkelgröße und damit den Lenkvorgaben eines Fahrzeugbedieners folgende Kurvenbahn einstellt.

Die hierzu mittels eines in der elektronischen Kontrolleinheit 56 hinterlegten Regelungsalgorithmus durchgeführte Angleichung des Istwerts αᵢₛₜ der Knickwinkelgröße an den berechneten Sollwert α ₛₒₗₗ erfolgt hierbei nicht nur während der Fahrt, sondern auch im Stillstand des Fahrzeuggespanns 10, sodass ein Rangieren oder Wenden vor allem unter beengten Platzverhältnissen vereinfacht wird.

Gemäß einer zweiten Ausgestaltung der Vorrichtung 54 berechnet die elektronische Kontrolleinheit 56 ausgehend von dem sensorisch erfassten Istwert δᵢₛₜ der Lenkwinkelgröße in Abhängigkeit des sensorisch erfassten Istwerts vᵢₛₜ der Fahrtgeschwindigkeitsgröße einen Sollwert γₛₒₗₗ für die Gierratengröße, wobei die Aufprägung des Giermoments r in diesem Fall durch asymmetrische Ansteuerung der Einzelradantriebe 46, 48, 50, 52 mit dem Ziel erfolgt, den Istwert γᵢₛₜ der Gierratengröße an den berechneten Sollwert γₛₒₗₗ anzugleichen.

Der berechnete Sollwert γₛₒₗₗ der Gierratengröße entspricht in diesem Fall der angesichts der aktuellen Fortbewegungsgeschwindigkeit des Fahrzeuggespanns 10 sowie der Lenkvorgaben des Fahrzeugbedieners zu erwartenden Kurvenbahn. Die mittels eines in der elektronischen Kontrolleinheit 56 hinterlegten Regelungsalgorithmus durchgeführte Angleichung zwischen Istwert γᵢₛₜ und Sollwert γₛₒₗₗ der Gierratengröße bewirkt daher eine Stabilisierung des Fahrzeuggespanns 10 beim Durchfahren einer Kurve oder bei der Ausführung eines Ausweichmanövers, wobei insbesondere ein unerwünschtes Über- bzw. Untersteuern unterdrückt wird.

Gemäß einer dritten Ausgestaltung der Vorrichtung 54 ermittelt die elektronische Kontrolleinheit 56 ausgehend von dem sensorisch erfassten Istwert δᵢₛₜ der Lenkwinkelgröße einen Sollverlauf D(s) einer zu durchfahrenden Kurvenbahn. Die Aufprägung des Giermoments r erfolgt hierbei durch asymmetrische Ansteuerung der Einzelradantriebe 46, 48, 50, 52 nach Maßgabe des ermittelten Sollverlaufs D(s), indem von der elektronische Kontrolleinheit 56 anhand des ermittelten Sollverlaufs D(s) berechnete asymmetrische Drehzahloffsets zur Ansteuerung der Einzelradantriebe 46, 48, 50, 52 vorgegeben werden. Die Vorgabe der Drehzahloffsets erfolgt auf Grundlage einer in der elektronischen Kontrolleinheit 56 hinterlegten Steuerkurve, in die der ermittelte Sollverlauf D(s) als Steuergröße eingeht.

Darüber hinaus nimmt die elektronische Kontrolleinheit 56 eine GPS-gestützte Anpassung des Sollverlaufs D(s) bzw. eine entsprechende Parametrisierung der in der elektronischen Kontrolleinheit 56 hinterlegten Steuerkurve mittels von einem GPS-System 68 bereitgestellten Positions- und Umgebungsinformationen vor, beispielsweise um einen in Fahrtrichtung vorausliegenden Fahrbahnabschnitt hinsichtlich möglicher Gefahrenstellen, Änderungen des Fahrbahnverlaufs oder dergleichen zu berücksichtigen.

Optional nimmt die elektronische Kontrolleinheit 56 zusätzlich zur Aufprägung des Giermoments r bedienerunabhängige Lenkeingriffe am landwirtschaftliche Traktor 18 vor. Diese bieten sich insbesondere im Falle größerer Richtungskorrekturen an, sofern diese auf Grundlage einer alleinigen Ansteuerung der Einzelradantriebe 46, 48, 50, 52 nicht durchführbar sein sollten. Die bedienerunabhängigen Lenkeingriffe erfolgen vorliegend durch Aufschaltung eines an der Lenkhandhabe 32 wirkenden Zusatzlenkmoments, das mittels eines elektrisch steuerbaren Lenkmomentgebers 70 erzeugt wird. Die Verwendung eines Lenkmomentgebers 70 ermöglicht es, dass der Fahrzeugbediener jederzeit die Kontrolle über die Lenkung des Fahrzeuggespanns 10 behält und den Lenkeingriffen durch Übersteuerung des an der Lenkhandhabe 32 aufgeschalteten Zusatzlenkmoments entgegensteuern kann.

Ferner erfolgt die Aufprägung des Giermoments r während der Durchführung eines Rangier- und/oder Wendevorgangs im Sinne der Erzielung eines übersteuernden Lenkverhaltens des Fahrzeuggespanns 10. Die Durchführung eines Rangier- und/oder Wendevorgangs erkennt die elektronische Kontrolleinheit 56 anhand hierfür charakteristischer Lenkvorgaben des Fahrzeugbedieners, wie eines maximalen Lenkeinschlags. Ein übersteuerndes Lenkverhalten lässt sich insbesondere durch gezielte Vergrößerung des Knickwinkels zwischen landwirtschaftlichem Traktor 18 und Transportanhänger 20 hervorrufen, sodass eine von der Stellung der Lenkhandhabe 32 abweichende, den Wendekreis verengende Kurvenbahn durchfahren wird. Je nach Ausgestaltung der Vorrichtung 54 geschieht dies entweder unmittelbar durch Vorgabe eines erhöhten Sollwerts α'ₛₒₗₗ > αₛₒₗₗ für die Knickwinkelgröße oder aber mittelbar durch entsprechende Modifikation des für die Gierratengröße vorgegebenen Sollwerts γₛₒₗₗ bzw. des Sollverlaufs D(s) der zu durchfahrenden Kurvenbahn.

Der Rangier- und/oder Wendevorgang ist von außen über eine mit der elektronischen Kontrolleinheit 56 kommunizierende Funkfernbedienung 72 steuerbar, sodass der Fahrzeugbediener einen verbesserten Überblick über den Rangier- und/oder Wendevorgang erhält. Bei der Funkfernbedienung 72 handelt es sich um ein Smartphone oder ein Tablet, das über eine WLAN- oder Bluetooth-Schnittstelle 74 mit der elektronischen Kontrolleinheit 56 in Verbindung steht.

Zusätzlich versetzt die elektronische Kontrolleinheit 56 den Transportanhänger 20 im Falle der Durchführung einer Rückwärtsfahrt des Fahrzeuggespanns 10 durch Aufschaltung einer an den Einzelradantrieben 46, 48, 50, 52 beidseitig vorgenommenen Antriebsmomenterhöhung in einen Zugbetriebsmodus. Mit anderen Worten übernimmt der Transportanhänger 20 dann die Führungsfunktion innerhalb des Fahrzeuggespanns 10, wobei durch Aufrechterhaltung einer am heckseitigen Kupplungspunkt 14 wirkenden vorbestimmten Zugkraft ein unerwünschtes Einknicken des Fahrzeuggespanns 10 verlässlich unterbunden wird. Die Lenkung des landwirtschaftlichen Traktors 18 wird in diesem Fall kraftfrei geschaltet, sodass die lenkbaren Räder 34, 36 von selbst der durch den Transportanhänger 20 vorgegebenen Zugrichtung folgen. Alternativ nimmt die Kontrolleinheit 56 der Zugrichtung entsprechende bedienerunabhängige Lenkeingriffe an den lenkbaren Rädern 34, 36 des landwirtschaftlichen Traktors 18 durch geeignete Ansteuerung des Lenkmomentgebers 70 vor.

## Patentansprüche

1. Vorrichtung zur Lenkunterstützung eines Fahrzeuggespanns, mit einem Zugfahrzeug (12) sowie einem an dem Zugfahrzeug (12) in einem heckseitigen Kupplungspunkt (14) schwenkbar angehängten Arbeitsgerät (16), wobei das Arbeitsgerät (16) auf gegenüberliegenden Seiten angeordnete Räder (38, 40, 42, 44) aufweist, die durch Ansteuerung zugehöriger Einzelradantriebe (46, 48, 50, 52) unabhängig voneinander mit einem Antriebsmoment (Mᵣ₁, Mᵣ₂, Mₗ₁, Mₗ₂) beaufschlagbar sind, **dadurch gekennzeichnet, dass** eine elektronische Kontrolleinheit (56) dem Arbeitsgerät (16) durch asymmetrische Ansteuerung der Einzelradantriebe (46, 48, 50, 52) ein Giermoment (Γ) derart aufprägt, dass eine über den heckseitigen Kupplungspunkt (14) auf das Zugfahrzeug (12) ausgeübte Querkraft (F_{quer}) im Sinne der Erzielung eines vorgegebenen Lenkverhaltens des Fahrzeuggespanns (10) aufgebaut wird.

2. Vorrichtung nach Anspruch 1, **dadurch gekennzeichnet, dass** die elektronische Kontrolleinheit (56) ausgehend von einem sensorisch erfassten Istwert (δᵢₛₜ) einer Lenkwinkelgröße, die einen an lenkbaren Rädern (34, 36) des Zugfahrzeugs (12) eingeschlagenen Radlenkwinkel wiedergibt, einen Sollwert (αₛₒₗₗ) einer Knickwinkelgröße berechnet, die einen zwischen Zugfahrzeug (12) und Arbeitsgerät (16) vorliegenden Knickwinkel wiedergibt, und mit einem für die Knickwinkelgröße sensorisch erfassten Istwert (αᵢₛₜ) vergleicht, wobei die Aufprägung des Giermoments (Γ) durch asymmetrische Ansteuerung der Einzelradantriebe (46, 48, 50, 52) mit dem Ziel erfolgt, den Istwert (αᵢₛₜ) der Knickwinkelgröße an den berechneten Sollwert (αₛₒₗₗ) anzugleichen.

3. Vorrichtung nach Anspruch 2, **dadurch gekennzeichnet, dass** die Angleichung des Istwerts (αᵢₛₜ) der Knickwinkelgröße an den berechneten Sollwert (γₛₒₗₗ) durch Aufprägung des Giermoments (Γ) im Stillstand des Fahrzeuggespanns (10) erfolgt.

4. Vorrichtung nach Anspruch 1, **dadurch gekennzeichnet, dass** die elektronische Kontrolleinheit (56) ausgehend von einem sensorisch erfassten Istwert (δᵢₛₜ) einer Lenkwinkelgröße, die einen an lenkbaren Rädern (34, 36) des Zugfahrzeugs (12) eingeschlagenen Radlenkwinkel wiedergibt, in Abhängigkeit eines sensorisch erfassten Istwerts (vᵢₛₜ) einer Fahrtgeschwindigkeitsgröße, die eine Fortbewegungsgeschwindigkeit des Zugfahrzeugs (12) wiedergibt, einen Sollwert (γ ₛₒₗₗ) einer Gierratengröße berechnet, die eine zeitliche Gierwinkeländerung um die Hochachse des Zugfahrzeugs (12) wiedergibt, wobei die Aufprägung des Giermoments (Γ) durch asymmetrische Ansteuerung der Einzelradantriebe (46, 48, 50, 52) mit dem Ziel erfolgt, den Istwert (γᵢₛₜ) der Gierratengröße an den berechneten Sollwert (γₛₒₗₗ) anzugleichen.

5. Vorrichtung nach Anspruch 1, **dadurch gekennzeichnet, dass** die elektronische Kontrolleinheit (56) ausgehend von einem Istwert (δᵢₛₜ) einer Lenkwinkelgröße, die einen an lenkbaren Rädern (34, 36) des Zugfahrzeugs (12) eingeschlagenen Radlenkwinkel wiedergibt, einen Sollverlauf (D(s)) einer zu durchfahrenden Kurvenbahn ermittelt, wobei die Aufprägung des Giermoments (Γ) durch asymmetrische Ansteuerung der Einzelradantriebe (46, 48, 50, 52) nach Maßgabe des ermittelten Sollverlaufs (D(s)) erfolgt.

6. Vorrichtung nach wenigstens einem der Ansprüche 1 bis 5, **dadurch gekennzeichnet, dass** die elektronische Kontrolleinheit (56) zusätzlich zur Aufprägung des Giermoments (Γ) bedienerunabhängige Lenkeingriffe am Zugfahrzeug (12) vornimmt.

7. Vorrichtung nach wenigstens einem der Ansprüche 1 bis 6, **dadurch gekennzeichnet, dass** die Aufprägung des Giermoments (Γ) während der Durchführung eines Rangier- und/oder Wendevorgangs im Sinne der Erzielung eines übersteuernden Lenkverhaltens des Fahrzeuggespanns (10) erfolgt.

8. Vorrichtung nach Anspruch 7, **dadurch gekennzeichnet, dass** der Rangier- und/oder Wendevorgang über eine mit der elektronischen Kontrolleinheit (56) kommunizierende Funkfernbedienung (72) steuerbar ist.

9. Vorrichtung nach wenigstens einem der Ansprüche 1 bis 8, **dadurch gekennzeichnet, dass** die elektronische Kontrolleinheit (56) das Arbeitsgerät (16) im Falle der Durchführung einer Rückwärtsfahrt des Fahrzeuggespanns (10) durch Aufschaltung einer an den Einzelradantrieben (46, 48, 50, 52) beidseitig vorgenommenen Antriebsmomenterhöhung in einen Zugbetriebsmodus versetzt.

10. Fahrzeuggespann, mit einem Zugfahrzeug (12) sowie einem an dem Zugfahrzeug (12) in einem heckseitigen Kupplungspunkt (14) schwenkbar angehängten Arbeitsgerät (16), umfassend eine Vorrichtung (54) nach wenigstens einem der vorhergehenden Ansprüche 1 bis 9.

## Claims

1. Device for assisting the steering of a vehicle combination with a tractor vehicle (12) and an implement (16) which is pivotably hitched to the tractor vehicle (12) at a rear-side coupling point (14), wherein the implement (16) has wheels (38, 40, 42, 44) which are arranged on opposite sides and to which a drive torque (Mᵣ₁, Mᵣ₂, Mₗ₁, Mₗ₂) can be applied by actuating associated individual wheel drives (46, 48, 50, 52) independently of one another, **characterized in that** an electronic control unit (56) impresses a yawing moment (Γ) on the implement (16) by asymmetric actuation of the individual wheel drives (46, 48, 50, 52), in such a way that a lateral force (Fₗₐₜ) which is applied to the tractor vehicle (12) via the rear-side coupling point (14) is built up with the effect of bringing about a predefined steering behaviour of the vehicle combination (10).

2. Device according to Claim 1, **characterized in that** the electronic control unit (56) calculates a setpoint value (αₛₑₜₚ) of a bending angle variable on the basis of an actual value (δ_{act}), acquired by a sensor, of a steering angle variable which represents a wheel steering angle which is adopted at steerable wheels (34, 36) of the tractor vehicle (12), which bending angle variable represents a bending angle which is present between the tractor vehicle (12) and the implement (16), and said device compares said setpoint value (αₛₑₜₚ) with an actual value (α_{act}) which has been acquired for the bending angle variable, wherein the yawing moment (Γ) is carried out by asymmetric actuation of the individual wheel drives (46, 48, 50, 52) with the objective of approximating the actual value (α_{act}) of the bending angle variable to the calculated setpoint value (αₛₑₜₚ).

3. Device according to Claim 2, **characterized in that** the approximation of the actual value (α_{act}) of the bending angle variable to the calculated setpoint value (γₛₑₜₚ) is carried out by impressing the yawing moment (Γ) in the stationary state of the vehicle combination (10).

4. Device according to Claim 1, **characterized in that** the electronic control unit (56) calculates a setpoint value (αₛₑₜₚ) of a yaw rate variable on the basis of an actual value (δ_{act}), acquired by a sensor, of a steering angle variable which represents a wheel steering angle which is adopted at steerable wheels (34, 36) of the tractor vehicle (12), as a function of an actual value (v_{act}), acquired by a sensor, of a velocity variable which represents a speed of motion of the tractor vehicle (12), which yaw rate variable represents a temporal change in the yaw angle about the vertical axis of the tractor vehicle (12), wherein the impressing of the yawing moment (Γ) is carried out by asymmetrical actuation of the individual wheel drives (46, 48, 50, 52) with the objective of approximating the actual value (γ_{act}) of the yaw rate variable to the calculated setpoint value (γₛₑₜₚ).

5. Device according to Claim 1, **characterized in that** the electronic control unit (56) determines a setpoint profile (D(s)) of a curved path to be travelled through, on the basis of an actual value (δ_{act}) of a steering angle variable which represents a wheel steering angle which is adopted at steerable wheels (34, 36) of the tractor vehicle (12), wherein the impressing of the yawing moment (Γ) is carried out by asymmetrical actuation of the individual wheel drives (46, 48, 50, 52) in accordance with the determined setpoint profile (D(s)).

6. Device according to at least one of Claims 1 to 5, **characterized in that** the electronic control unit (56) performs operator-independent steering interventions at the tractor vehicle (12) in addition to the impressing of the yawing moment (Γ).

7. Device according to at least one of Claims 1 to 6, **characterized in that** the impressing of the yawing moment (Γ) is carried out during the execution of a manoeuvring and/or turning with the objective of bringing about an over-steering behaviour of the vehicle combination (10).

8. Device according to Claim 7, **characterized in that** the manoeuvring and/or turning process can be controlled by means of a radio remote control (72) which communicates with the electronic control unit (56).

9. Device according to at least one of Claims 1 to 8, **characterized in that** when reverse travel of the vehicle combination (10) is being carried out, the electronic control unit (56) places the implement (16) in a traction mode by implementing an increase in the drive torque which is carried out at the individual wheel drives (46, 48, 50, 52) on both sides.

10. Vehicle combination having a tractor vehicle (12) and an implement (16) which is pivotably hitched to the tractor vehicle (12) at a rear-side coupling point (14), comprising a device (54) according to at least one of the preceding Claims 1 to 9.

## Revendications

1. Dispositif d'assistance à la direction d'un attelage routier, comprenant un véhicule tracteur (12) ainsi qu'un appareil de travail (16) attelé de manière pivotante au véhicule tracteur (12) en un point d'accouplement (14) côté arrière, l'appareil de travail (16) possédant des roues (38, 40, 42, 44) disposées sur des côtés opposés, lesquelles peuvent être sollicitées indépendamment les unes des autres par un couple d'entraînement (Mᵣ₁, Mᵣ₂, Mₗ₁, Mₗ₂) par la commande de mécanismes d'entraînement de roue individuelle (46, 48, 50, 52) associés, **caractérisé en ce qu'**une unité de contrôle électronique (56) de l'appareil de travail (16) applique un moment de lacet (Γ) par une commande asymétrique des mécanismes d'entraînement de roue individuelle (46, 48, 50, 52) de telle sorte qu'une force transversale (F_{quer}) exercée sur le véhicule tracteur (12) par le biais du point d'accouplement (14) côté arrière est établie en vue d'obtenir un comportement de direction prédéfini de l'attelage routier (10).

2. Dispositif selon la revendication 1, **caractérisé en ce que** l'unité de contrôle électronique (56), à partir d'une valeur réelle (δᵢₛₜ) acquise par un système de détection d'une grandeur d'angle de braquage, laquelle reproduit un angle de braquage de roue appliqué aux roues orientables (34, 36) du véhicule tracteur (12), calcule une valeur de consigne (αₛₒₗₗ) d'une grandeur d'angle d'articulation, laquelle reproduit un angle d'articulation présent entre le véhicule tracteur (12) et l'appareil de travail (16), et la compare avec une valeur réelle (αᵢₛₜ) acquise par un système de détection d'une grandeur d'angle d'articulation, l'application du moment de lacet (Γ) par une commande asymétrique des mécanismes d'entraînement de roue individuelle (46, 48, 50, 52) étant effectuée avec pour objectif d'aligner la valeur réelle (αᵢₛₜ) de la grandeur d'angle d'articulation sur la valeur de consigne (αₛₒₗₗ) calculée.

3. Dispositif selon la revendication 2, **caractérisé en ce que** l'alignement de la valeur réelle (αᵢₛₜ) de la grandeur d'angle d'articulation sur la valeur de consigne (αₛₒₗₗ) calculée s'effectue an appliquant le moment de lacet (Γ) lorsque l'attelage routier (10) est immobilisé.

4. Dispositif selon la revendication 1, **caractérisé en ce que** l'unité de contrôle électronique (56), à partir d'une valeur réelle (δᵢₛₜ) acquise par un système de détection d'une grandeur d'angle de braquage, laquelle reproduit un angle de braquage de roue appliqué aux roues orientables (34, 36) du véhicule tracteur (12), en fonction d'une valeur réelle (vᵢₛₜ) acquise par un système de détection d'une grandeur de vitesse de déplacement, laquelle reproduit une vitesse de déplacement en marche avant du véhicule tracteur (12), calcule une valeur de consigne (γₛₒₗₗ) d'une grandeur de taux de lacet, laquelle reproduit une variation dans le temps de l'angle de lacet autour de l'axe vertical du véhicule tracteur (12), l'application du moment de lacet (Γ) par une commande asymétrique des mécanismes d'entraînement de roue individuelle (46, 48, 50, 52) étant effectuée avec pour objectif d'aligner la valeur réelle (γᵢₛₜ) de la grandeur de taux de lacet sur la valeur de consigne (γₛₒₗₗ) calculée.

5. Dispositif selon la revendication 1, **caractérisé en ce que** l'unité de contrôle électronique (56), à partir d'une valeur réelle (δᵢₛₜ) d'une grandeur d'angle de braquage, laquelle reproduit un angle de braquage de roue appliqué aux roues orientables (34, 36) du véhicule tracteur (12), détermine une courbe de consigne (D(s)) d'une trajectoire incurvée à traverser, l'application du moment de lacet (Γ) par une commande asymétrique des mécanismes d'entraînement de roue individuelle (46, 48, 50, 52) étant effectuée en fonction de la courbe de consigne (D(s)) déterminée.

6. Dispositif selon au moins l'une des revendications 1 à 5, **caractérisé en ce que** l'unité de contrôle électronique (56) réalise en plus des interventions dans la direction du véhicule tracteur (12) indépendamment de l'opérateur en vue d'appliquer le moment de lacet (Γ).

7. Dispositif selon au moins l'une des revendications 1 à 5, **caractérisé en ce que** l'application du moment de lacet (Γ) a lieu pendant l'exécution d'une manoeuvre et/ou d'un demi-tour en vue d'obtenir un comportement de direction en survirage de l'attelage routier (10).

8. Dispositif selon la revendication 7, **caractérisé en ce que** la manoeuvre et/ou le demi-tour peuvent être commandés par le biais d'une radiocommande (72) qui communique avec l'unité de contrôle électronique (56).

9. Dispositif selon au moins l'une des revendications 1 à 8, **caractérisé en ce qu'**en cas d'exécution d'une marche arrière de l'attelage routier (10), l'unité de contrôle électronique (56) transpose l'appareil de travail (16) dans un mode de traction en mettant en oeuvre une augmentation du couple d'entraînement réalisée des deux côtés sur les mécanismes d'entraînement de roue individuelle (46, 48, 50, 52).

10. Attelage routier, comprenant un véhicule tracteur (12) ainsi qu'un appareil de travail (16) attelé de manière pivotante au véhicule tracteur (12) en un point d'accouplement (14) côté arrière, comportant un dispositif (54) selon au moins l'une des revendications 1 à 9.
